# EUROPEAN PATENT APPLICATION

(11) **EP 1 207 681 A2**
(43) Date of publication of application: **22.05.2002**
(21) Application number: 01204241.2
(22) Date of filing: 05.11.2001
(51) Int. Cl.: H04N 1/21

(54) **Method for ensuring the validity of a stored set of related digital images**

(30) Priority: 17.11.2000 US 716107
(71) Applicant: EASTMAN KODAK COMPANY, Rochester, New York 14650 (US)
(72) Inventor: Spaulding, Kevin E., Rochester, New York 14650-2201 (US); Thiemel, Timothy J., Rochester, New York 14650-2201 (US)
(74) Representative: Parent, Yves

(57) **Abstract**

The present invention represents a method for ensuring the validity for a stored set of related digital images includes computing one or more original digital image validity key values from the set of related digital images; storing the set of related digital images in a digital image memory; storing the digital image validity key values in a digital data memory such that they are associated with the stored set of the related digital images; reading one or more images in the stored set of related digital images from the digital image memory; computing one or more new digital image validity key values from the stored set of related digital images; and determining the validity of the stored set of related digital images by comparing the original digital image validity key values to the new digital image validity key values to verify that the digital images in the stored set of related digital images have not been modified.

## Description

The present invention relates to the field of digital imaging, and more particularly to a method for ensuring the validity of a stored set of related digital images.

In digital imaging systems, there are frequently occasions where it is desirable to store a set of digital images that are related to one another for use at a later time. For example, a base digital image may be stored together with a mask digital image that is used to indicate regions of interest within the base digital image. Similarly, a motion sequence of digital images can be stored representing images captured at different time intervals.

There are many different ways that the set of related digital images can be stored. For example, each of the related digital images can be stored in an individual digital files. Alternatively, the images can be stored together in a single image file. In this case, one digital image is frequently designated as a base digital image, and the other related digital images can be stored as associated metadata within the digital image file.

The set of related digital images are typically intended to be used together at some time when the stored digital images are accessed. For example, a mask image can be used to designate areas of a base digital image that should be modified in some way, or a motion sequence of images can be displayed sequentially to convey the appearance of motion.

A problem with these prior art approaches is that members of the set of related digital images can frequently be accessed individually, and may be arbitrarily modified in such a way that they invalidate the relationship between the members of the set of related digital images. For example, if a base image were to be cropped, scaled and/or rotated, it would no longer be appropriate to use the related mask image to indicate regions of interest within the digital image since the regions of interest would not be found at the same image locations. It is an object of the present invention to provide a way for determining if a set of previously stored original digital images have been modified or tampered with.

This object is achieved in a method for ensuring the validity for a stored set of related digital images comprising the steps of:
a) computing one or more original digital image validity key value(s) from image data in the set of related digital images;
b) storing the set of related digital images in a digital image memory; and
c) storing the digital image validity key value(s) in a digital data memory such that the stored set of digital image validity key value(s) are associated with the stored set of the related digital images and can be retrieved at a subsequent time to determine if the stored set of related digital images has been modified.

The present invention has the advantage that it can be used to ensure the validity of a set of related digital images, thus avoiding undesirable results that may result when one or more digital images in the set of related digital images has been modified. In a preferred embodiment of the present invention, it can be used to determine whether a stored residual image is compatible with a stored limited color gamut digital image before such images are combined to form a reconstructed extended color gamut digital image.
FIG. 1 is graph comparing the color gamuts of a typical video display, and a typical reflection print;
FIG. 2 is a flowchart showing the basic steps involved with encoding an extended color gamut digital image using a limited color gamut digital image and one or more residual images;
FIG. 3 is a flowchart showing the storing a set of related digital images in accordance with the present invention;
FIG. 4 is a flowchart showing the steps involved with determining the validity of a set of related digital images in accordance with the present invention; and
FIG. 5 illustrates a method for practicing the present invention using a digital communications network.

The present invention relates to a method for ensuring the validity of a set of related digital images. In a preferred embodiment of the present invention, the set of related digital images comprise a limited color gamut digital image and one or more residuals images that are adapted to be used to form a reconstructed extended color gamut digital image.

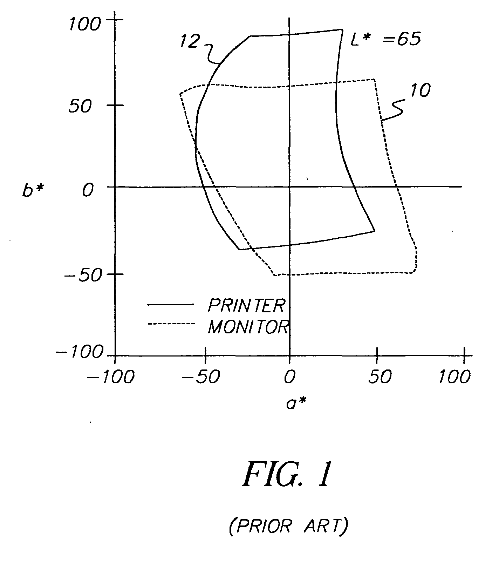

Digital images are frequently stored in a video RGB representation due to software compatibility constraints. In order to encode images from various sources in a video RGB representation, it is frequently necessary to discard information that is outside the color gamut of the video RGB color space. For example, FIG. 1 shows a comparison of a typical Video RGB Color Gamut 10 and a typical Reflection Print Color Gamut 12. This figure shows a*-b* cross-sections of the color gamuts in the well known CIELAB space at an L* of 65. The colors that are inside the boundary are within the gamuts of the respective devices, while those that are outside the boundary cannot be reproduced, and are therefore referred to as "out-of-gamut" colors. It can be seen that there is a large set of color values with a b* value larger than 60 that can be produced on the printer, but are outside the color gamut of the video display. As a result, if the reflection print were scanned and stored in a video RGB color space, it would not be possible to encode this color information.

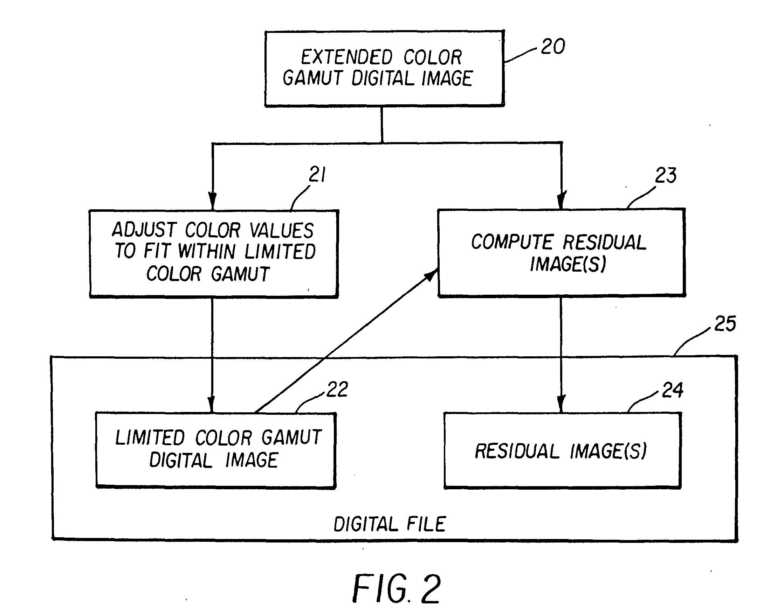

FIG. 2 represents a way to store extended color gamut digital images while maintaining compatibility with existing software and imaging systems. The method involves the storage of a limited color gamut digital image 22 together with one or more residual images 24 representing the difference between the extended color gamut digital image 20 and the limited color gamut digital image 22. An adjust color values to fit within limited color gamut step 21 is used to adjust the colors in the extended color gamut digital image 20 forming a limited color gamut digital image 22. A compute residual image(s) step 23 is used to determine one or more residual image(s) 24 representing the difference between the extended color gamut digital image 20 and the limited color gamut digital image 22. The limited color gamut digital image 22 and the residual image(s) 24 can be stored within a digital file 25, or alternatively can be stored in separate digital files. In one embodiment of the invention, the residual image(s) 24 are stored as metadata tags within a digital image file used to store the limited color gamut digital image 22. Metadata can be defined to be any data relating to an original digital image aside from the actual pixel values that comprise the digital image.

Using this approach, applications that only know how to deal with the limited color gamut digital image can use only the basic image stored in the digital image file. However, applications that know what to do with the residual image data can combine the limited color gamut digital image with the residual image(s) to form a reconstructed extended color gamut digital image.

A potential problems with this approach is that the limited color gamut digital image can be read and manipulated by an application that doesn't understand how to use the residual image data, and a modified limited color gamut digital image can then be saved. The limited color gamut digital image may have many different types of image processing operations applied to it. For example, it may be cropped, zoomed, rotated, sharpened, color corrected, and so forth Many applications are designed to carry any metadata information from the original limited color gamut digital image along with the image and save it with the modified limited color gamut digital image. However, if an application that understands how to use the residual image data were to open the file with the modified limited color gamut digital image, objectionable artifacts may result if the residual image data corresponding to the original limited color gamut digital image were to be combined with the modified limited color gamut digital image to determine a reconstructed extended color gamut digital image. The present invention represents a way to overcome this problem by providing a method for verifying that neither the limited color gamut digital image nor the residual image(s) have been modified before they are combined to determine a reconstructed extended color gamut digital image.

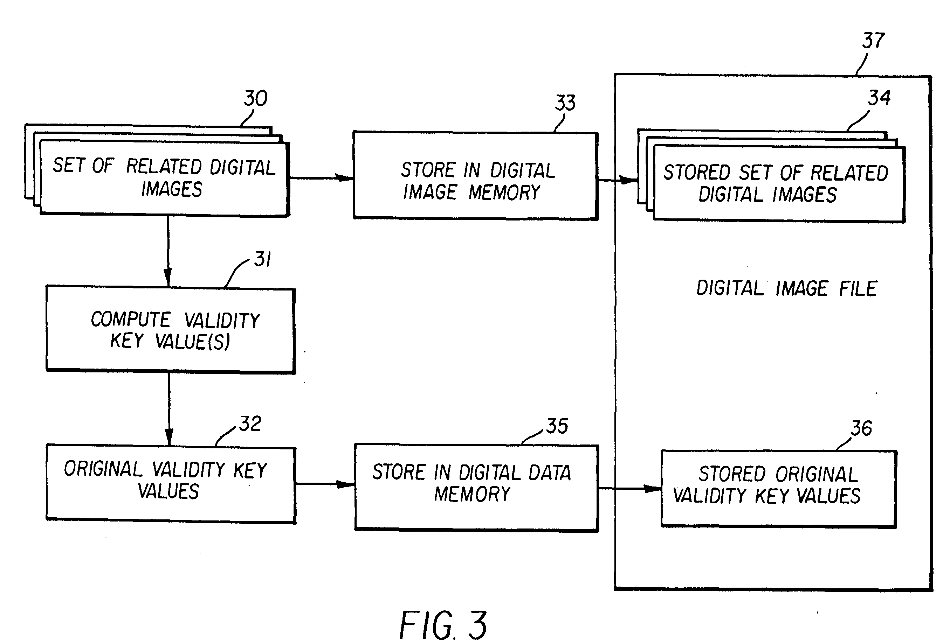

A flowchart showing one embodiment of the present invention is shown in FIG.3. The input to the process is a set of related digital images 30. In a preferred embodiment of the present invention, the set of related digital images 30 comprise a limited color gamut digital image together with one or more residual images as was shown in FIG. 2. Alternatively, the method can easily be generalized to be applied to other types of sets of related digital images. The set of related digital images 30 will also be understood to those skilled in the art as including a motion sequence of digital images representing images captured at different time intervals, or a base digital image stored together with a mask digital image that is used to indicate regions of interest within the base digital image. It will be clear to one skilled in the art that many other types of sets of related digital images can also be used.

A compute validity key value(s) step 31 is used to determine one or more original validity key values 32 from the set of related digital images 30. A store in digital image memory step 33 is used to store the set of related digital images 30 forming a stored set of related digital images 34. Likewise, a store in digital data memory step 35 is used to store the original validity key values 32 forming stored original validity key values 36. In some cases, the digital image memory and the digital data memory may both be part of a digital image file 37. In other cases, the digital image memory and the digital data memory may be part of two or more digital files, or may be part of a digital image database.

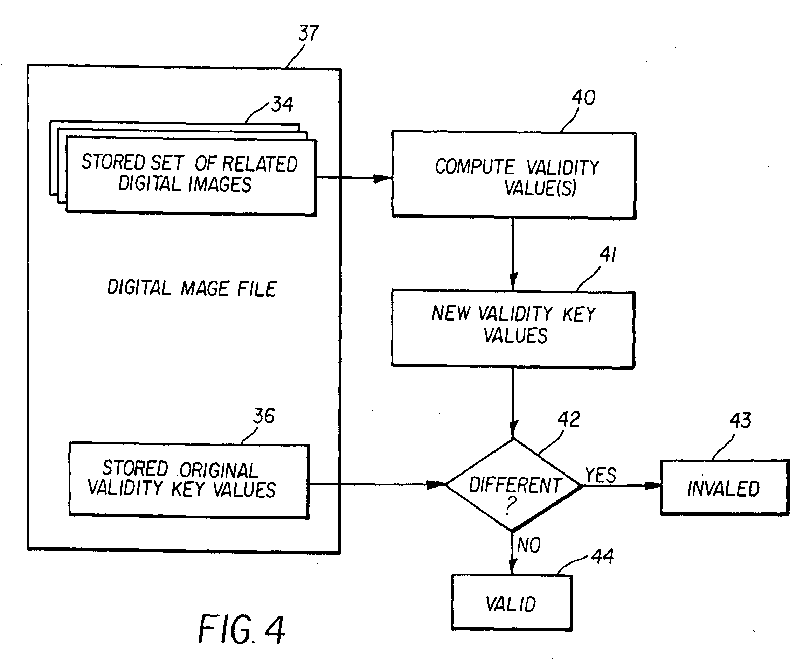

The usefulness of the stored original validity key values 36 is realized when it is desired to access and use the stored set of related digital images 34. FIG. 4 shows a flowchart illustrating the basic steps involved with accessing the stored set of related digital images 34. Where elements of this figure are identical to those in FIG. 3, identical part numbers have been used. A compute validity key value(s) step 40 is used to determine one or more new validity key values 41 from the stored set of related digital images 34. Typically, the compute validity key value(s) step 40 will be identical to the compute validity key value(s) step 31 shown in FIG. 3. A comparison operation 42 is then used to compare the new validity key values 41 to the stored original validity key values 36. If the validity key values are different, the stored set of related digital images 34 is deemed to be invalid 43, and therefore no image processing operations that would combine the digital images in the stored set of related digital images 34 should be performed. Otherwise, the stored set of related digital images 34 can be deemed to be valid 44. In such cases, the digital images in the stored set of related digital images 34 can legitimately be combined to produce a new digital image.

Each of the steps in FIG. 3 and FIG. 4 will now be considered in more detail. The compute validity key value(s) step 31 can take many forms. The basic purpose of this step is to determine one or more original validity key values which are derived from the contents of the set of related digital images 30 such that any change in the content of the set of related digital images 30 will result in different validity key values. There are many different types of algorithms that can produce the desired effect, which are typically referred to as "hash algorithms."

In the broadest sense, a hash algorithm may be defined as any relatively computationally efficient function mapping binary strings of arbitrary length to binary strings of some fixed length. The resulting fixed length binary strings are referred to as hash values. It is a desirable characteristic of any hash algorithm that for unique input data streams being hashed, unique hash values are produced. While this can never be achieved 100% of the time for any given algorithm, the higher the probability of it being true, the more robust the hash algorithm is considered to be. Robustness is typically increased at the cost of computational speed.

In one preferred embodiment invention, one or more of the related images to be validated are used as the binary strings of arbitrary length to be hashed. The resulting hash values are then used as the validity keys. While the use of hash algorithms is well known for specific applications, such as error checking during the transmission or storage of digital data, it should be noted that the method of the present invention has distinct differences from the prior art applications. Rather than using these algorithms to check for unintentional errors introduced while handling digital data, the present invention is ensuring that intentional image manipulations have not been applied to one digital image in a set of related digital images, therefore invalidating the relationship between that digital image, and the rest of the related digital images.

Several classes of hash algorithms exist which are suitable for use in this invention, including but not limited to truncations or division based checksums. Other more computationally intensive algorithms may be used to ensure that even the slightest change in the input data streams can be detected.

Truncation schemes merely discard specific portions of the input binary stream while retaining other portions to produce the hash value of fixed length. A simple example would be to retain the first n bits and concatenate the last m bits of the arbitrary length binary string being hashed but discard all of the other bits to produce a fixed length hash value of length n+m bits. More sophisticated and therefore robust algorithms are easily imagined.

Division based checksums typically treat the binary string of arbitrary length to be hashed as the dividend of a division operation. By selecting a divisor of specific length a fixed length remainder will be generated upon division to produce the hash value. An example of this are the numerous Cyclic Redundancy Check algorithms used in various computer science applications. For several examples, see A. S. Tanenbaum, "Computer Networks", Prentice Hall, 1996. By carefully choosing the value of the divisor a relatively robust and efficient algorithm can be obtained. One version of this hash algorithm that could be used for the present invention is the well-know CRC-32 algorithm using the standard ethernet polynomial as the divisor. This algorithm will process an input digital data file and produce a 4-byte hash value.

Another suitable algorithm is the Secure Hash Algorithm (SHA-1) described in the document: "Secure Hash Standard," Federal Information Processing Standard Publication 180-1. Compared to the CRC-32 algorithm, SHA-1 offers a more robust implementation at the cost of computational speed.

Original validity key values 32 can be determined in many different ways from the set of related digital images 30. For example, an individual validity key value can be determined using the image data for each digital image in the set of related digital images 30. In this case, it is possible to determine at a later time whether any particular digital image in the stored set of related digital images 34 has been modified, and therefore that its relationship to the other digital images in the stored set of related digital images 34 is invalid. Alternatively, a single validity key value can be determined for the entire set of related digital images 30. This would make it possible to determine whether any digital images in the stored set of related digital images 34 have been modified, but would not make it possible to determine which specific digital image has been modified. In another embodiment of the present invention, individual validity key values can be determined for subsets of the image pixels in each of the digital images in the set of related digital images 30. This would make it possible to determine which subset of the digital image may have been modified.

The store in digital image memory step 33 and the store in digital data memory step 35 can be implemented in a number of different ways. For example, the set of related digital images 30 and the original validity key values 32 can be stored in a digital data structure within the memory of a digital computer. In a preferred embodiment of the present invention, the set of related digital images 30 are stored in one or more digital image files. Such files can be in many different formats such as the well known TIFF or EXIF formats. Each digital image in the set of related digital images 30 can be stored in individual digital image files. Alternatively, one digital image can be selected as a base digital image and stored in a digital image file, and the other digital images in the set of related digital images 30 can be stored as metadata within the same digital image file. Likewise, the original validity key values 32 can be stored in a digital data file, or can be stored as metadata within the digital image file used to store the set of related digital images 30.

In a preferred embodiment of the present invention, the digital memory used to store the set of related digital images 30 and the original validity key values 32 is a computer readable storage medium. The computer readable storage medium can comprise, for example: magnetic storage media such as magnetic disc (such as a floppy disc) or magnetic tape; optical storage media such as optical disk, optical tape, or machine readable bar code; solid state electronic storage devices such as random access memory (RAM), or read only memory (ROM); or any other physical device or medium employed to store digital data.

The comparison operation 42 can also take many forms. In a preferred embodiment of the present invention, the comparison operation simply determined whether the new validity key values 41 are exactly identical to the stored original validity key values 36. If the validity key values are not identical, the stored set of related digital images 34 is deemed to be invalid 43. Otherwise, the stored set of related digital images 34 are deemed to be valid 44. In alternate embodiments of the present invention, the comparison operation 42 can be used to determine the relative degree of difference between the original set of related digital images 30 and the stored set of related digital images 34. In this case, the stored set of related digital images 34 can be deemed to be invalid if the difference value exceeds some threshold difference. In order to use this approach, the compute validity key value(s) step 31 needs to be designed such that the validity key values can be used to infer the relative similarity of two images.

As discussed earlier, one preferred embodiment of this invention involves storing a limited color gamut digital image in a digital image file, and storing a residual image as metadata within the digital image file. The digital image validity key(s) are used to ensure that it is valid to use the stored residual image together with the stored limited color gamut digital image to form a reconstructed extended color gamut digital image.

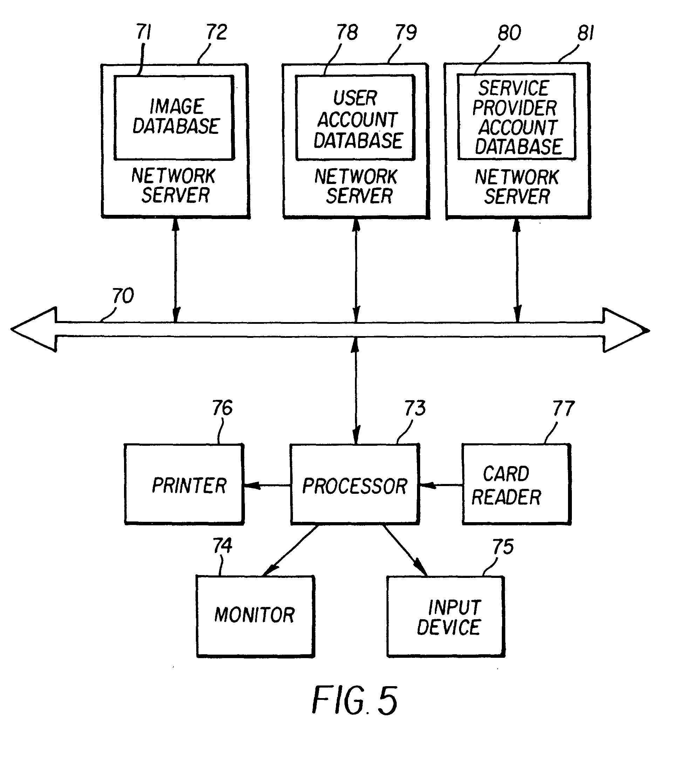

FIG. 5 illustrates an embodiment of the present invention where digital image files containing stored digital image data are accessed by a digital communications network, such as the Internet. In this case, an image database 71 is located on a network server 72. The image database 71 is used to store digital image files that have been processed using the methods described earlier and include stored sets of related digital images, together with associated stored original validity key values. The network server 72 is connected to a communications network 70. For example, the communications network 70 could be the Internet, or a local area network. A user uses a processor 73 to access the network server 72 via the communications network 70. The processor 73 can be a home computer, or alternatively it could be a computer in a retail kiosk, and so forth Typically, the processor would use a monitor 74 for the purpose of displaying preview images, and providing information to the user. One or more input devices 75 can be used by the user to provide instructions to the processor 73. Examples of typical input devices would include a keyboard, a mouse, a trackball, a touch pad or a touch screen. A printer 76 may also be connected to the processor for providing output prints to the user. Alternatively, a remote printer could also be accessed over the communications network 70. A card reader 77 can also be connected to the processor 73 for purposes of reading account information from a credit card or a debit card as part of the process of obtaining payment from a user.

Other network servers can also be attached to the communications network 70. For example, consider the case where a user makes payment via a communications network. One common way for the user to provide a payment identifier to a service provider would be for him or her to supply a valid credit card number. The service provider would then access a user account database 78 on a network server 79 to debit the appropriate payment, which would then be credited to an account specified by the service provider by accessing a service provider account database 80 on another network server 81. Similarly, the user could supply information regarding a debit account from which payment is to be electronically transferred. After the payment has been transferred, the service provider would then provide the requested service to the user.

A computer program product having a computer readable storage medium can have a computer program stored thereon for performing all the steps of the present invention. The computer readable storage medium can comprise, for example; magnetic storage media such as magnetic disc (such as a floppy disc) or magnetic tape; optical storage media such as optical disk, optical tape, or machine readable bar code; solid state electronic storage devices such as random access memory (RAM), or read only memory (ROM); or any other physical device or medium employed to store a computer program.

Other features of the invention are included below.

The method where the digital memory is a magnetic storage medium.

The method where the digital memory is an optical storage medium.

The method where the digital memory is a solid state electronic storage device.

The method where the stored set of related digital images are determined to be invalid if any of the original digital image validity key value(s) are found to be different than the new digital image validity key value(s).

The method further including the step of obtaining payment from a user.

The method of claim further including the step of obtaining a payment identifier from the user.

The method where the payment identifier includes information about an account from which payment is to be electronically transferred.

The method where the payment identifier includes a credit card account where the payment is to be debited.

The method further including the step of providing a reader for reading a credit card from the user.

The method where the payment identifier is obtained from the user via a communications network.

## Claims

1. A method for ensuring the validity for a stored set of related digital images comprising the steps of:
a) computing one or more original digital image validity key value(s) from the set of related digital images;
b) storing the set of related digital images in a digital image memory; and
c) storing the digital image validity key value(s) in a digital data memory such that the stored set of digital image validity key value(s) are associated with the stored set of the related digital images and can be retrieved at a subsequent time to determine if the stored set of related digital images has been modified.

2. A method for ensuring the validity for a stored set of related digital images comprising the steps of:
a) computing one or more original digital image validity key value(s) from the set of related digital images;
b) storing the set of related digital images in a digital image memory;
c) storing the digital image validity key value(s) in a digital data memory such that the stored digital image validity key value(s) are associated with the stored set of the related digital images;
d) reading one or more images in the stored set of related digital images from the digital image memory;
e) computing one or more new digital image validity key value(s) from the stored set of related digital images; and
f) determining the validity of the stored set of related digital images by comparing the original digital image validity key value(s) to the new digital image validity key value(s) to verify that the digital images in the stored set of related digital images have not been modified.

3. The method of claim 2 further including the step of combining two or more digital images in a valid stored set of related digital images to produce a new digital image.

4. The method of claim 2 where the set of related digital images include a limited color gamut digital image and one or more residual images representing the difference between the limited color gamut digital image and an extended color gamut digital image.

5. The method of claim 2 further including the step of determining a reconstructed extended color gamut digital image from the stored set of related digital images if the stored set of related digital images is determined to be valid.

6. The method of claim 2 where the set of related digital images include an original digital image and one or more residual images representing the difference between the original digital image and a modified digital image determined from the original digital image using an image processing enhancement operation.

7. The method of claim 2 where a digital image validity key value is determined for each digital image in the set of related digital images.

8. The method of claim 2 where a single digital image validity key value is determined for the entire set of related digital images.

9. The method of claim 2 where one or more of the digital image validity key value(s) are determined using a data hashing algorithm.

10. The method of claim 2 where step b) includes storing the set of related digital images in a digital image file.
